# EUROPÄISCHE PATENTSCHRIFT

(11) **EP 1 042 537 B1**
(45) Veröffentlichungstag und Bekanntmachung des Hinweises auf die Patenterteilung: **17.10.2001**
(21) Anmeldenummer: 98965789.5
(22) Anmeldetag: 08.12.1998
(51) Int. Cl.: C25B 1/26, C01B 7/07

(54) **VERFAHREN ZUR ELEKTROCHEMISCHEN AUFARBEITUNG VON HCl-GAS ZU HOCHREINEM CHLOR**
METHOD FOR ELECTROCHEMICALLY PROCESSING HCl GAS INTO HIGHLY PURE CHLORINE
PROCEDE PERMETTANT DE TRAITER ELECTROCHIMIQUEMENT DU GAZ CHLORHYDRIQUE POUR OBTENIR DU CHLORE DE GRANDE PURETE

(30) Priorität: 15.12.1997 DE 19755636
(43) Veröffentlichungstag der Anmeldung: 11.10.2000
(73) Patentinhaber: BAYER AG, 51368 Leverkusen (DE)
(72) Erfinder: GESTERMANN, Fritz, D-51377 Leverkusen (DE)
(86) Internationale Anmeldenummer: EP9807974
(87) Internationale Veröffentlichungsnummer: WO9931297

(56) Entgegenhaltungen:
- WO-A-95/14797
- FR-A- 1 438 213
- US-A- 2 719 822
- US-A- 3 799 860
- US-A- 4 247 532

## Beschreibung

Die Erfindung betrifft ein Verfahren zur elektrochemischen Aufarbeitung von HCI-Gas zu hochreinem Chlor, in dem eine HCl-Gasphasenelektrolyse mit einer Salzsäureelektrolyse gegebenenfalls mit Sauerstoffverzehrkathode zu einer HCl-Recyclinganlage kombiniert ist.

HCl-Gas, das als Nebenprodukt vieler verschiedener chemischer Umsetzungen resultiert, wird gewöhnlich zu Chlorgas umgesetzt, um dieses in den Produktionskreislauf wieder zurückführen zu können. Dabei wird in einem bekannten Verfahren HCl-Gas in einer Gasphasenelektrolyse zu Chlorgas umgesetzt. Dieses weist jedoch immer noch einen gewissen Gehalt an nicht vollständig umgesetztem HCl-Gas auf. Das HCI-Gas wird nach grundsätzlich bekannter Technik vom Chlorgas getrennt. Bei der Hochdruckverflüssigung fällt durch Kühlung neben dem gereinigten flüssigen Chlor das HCl-Gas als "Kopfgas" an. Durch Hochdruckdestillation des flüssigen Chlor werden weitere HCI-Gasreste aus dem Chlor ausgetrieben. Die Gasphasenelektrolyse von Chlorwasserstoff zu Chlorgas wird beispielsweise beschrieben in der Patentschrift US 5 411 641.

Das bekannte oben beschriebene Trennverfahren hat den Nachteil, daß die Abtrennung des HCl-Gases vom Chlor aufgrund der Kühl- und Wiedererwärmungsvorgänge sehr energieintensiv und aufwendig ist, und daß die HCl-Abtrennung nicht vollständig ist. Darüber hinaus ist die Handhabung größerer Mengen von flüssigem Chlor unvermeidlich, um den Chlorwasserstoff als Nebenprodukt liefernden Prozeß überhaupt starten zu können. Die Alternative eines Chlorwasserstoff-Flüssiggaslagers ist noch unattraktiver, da in einem solchen Falle bei noch höheren Drücken gearbeitet werden muß, um das HCI-Gas zu verflüssigen.

In der Offenlegungsschrift EP 785 294 A1 ist ein Elektrolyseverfahrcn beschrieben, bei dem wäßrige Salzsäure mit einer Konzentration von maximal 20 % in einer Membran-Elektrolysezelle anodisch zu Chlorgas umgesetzt wird. Hierbei wird kathodisch mit einer Sauerstoffverzehrkathode gearbeitet. Die im Dauerbetrieb erreichbare Stromdichte wird dabei auf ca. 4 kA/m² begrenzt.

Ausgehend von dem geschilderten Stand der Technik besteht daher Bedarf an einem einfachen Aufarbeitungsverfahren von HCl-Gas zu elementarem Chlor, das die aufwendigen HCl- bzw. Chlorverflüssigung vermeidet, das bei erheblich höherer Stromdichte betrieben werden kann, das günstiger hinsichtlich des Energiebedarfes ist und das sich darüber hinaus auf einfache Weise an beliebige andere kontinuierliche Prozesse ankoppeln läßt, bei denen HCl-Gas als Produkt anfällt.

Die Aufgabe wird erfindungsgemäß gelöst durch ein Verfahren zur elektrochemischen Aufarbeitung von HCl-Gas zu hochreinem Chlor, das Gegenstand der Erfindung ist und dadurch gekennzeichnet ist,
daß das HCl-Gas in einer ersten Gasphasenelektrolysestufe zu einem HCl-Gas enthaltenden Chlorgas umgesetzt wird,
daß das HCl-haltige Chlorgas in einer zweiten Stufe mit abgereicherter flüssiger Salzsäure als Absorbens unter Bildung von angereicherter Salzsäure ausgewaschen und dadurch das Chlorgas vom HCl-Gas befreit wird,
daß die angereicherte Salzsäure in einer dritten Stufe, der Flüssigphasenelektrolyse, unter Bildung von abgereicherter Salzsäure in Chlorgas bzw. insbesondere bei Verwendung von einer Sauerstoffverzehrkathode zu Chlorgas und Wasser zersetzt wird,
daß die abgereicherte Salzsäure in die Absorptionsstufe zurückgeführt wird
und daß die in der Gasphasenelektrolysestufe und der Flüssigphasenelektrolysestufe erzeugten Chlorströme abgezogen und gegebenenfalls vereinigt und gegebenenfalls getrocknet werden.

Die Chlorströme können anschließend wieder einem chlorverbrauchenden chemischen Verfahren zugeführt werden.

Gereinigtes HCl-Gas, das z.B. als Nebenprodukt verschiedener chemischer Verfahren wie der Isocyanat- oder Polycarbonatherstellung anfällt, wird in einer ersten Stufe bei sehr hohen Stromdichten zu Chlor und Wasserstoff umgesetzt. Die Reaktion kann mit hohen Ausbeuten bei niedrigen Drücken oder sogar drucklos betrieben werden. Das Reaktionsprodukt Chlor wird von nicht umgesetzten HCl-Gasanteilen in einer kleineren HCI-Absorptionsanlage befreit. Diese Absorptionsanlage steht im Kreislaufverbund mit einer nachgeschalteten Salzsäureelektrolyse mit Sauerstoffverzehrkathode oder mit einer Chlor und Wasserstoff erzeugenden, aus dem Stand der Technik grundsätzlich bekannten Elektrolyse. Dünne, insbesondere 12 - 14%ige Salzsäure (z.B. Anolyt aus der nachgeschalteten Elektrolyse) wird hierbei im Gegenstrom zum HCl-haltigen Chlorgas geführt, so daß die angereicherte, durchaus chlorhaltige Salzsäure der zweiten Elektrolysestufe zugeführt werden kann. Das durch die Nachreinigung mit der niederkonzentrierten Salzsäure praktisch HCl-freie, aber feuchte Chlorgas kann als erster Teilstrom der Trocknung zugeführt werden. Es ist vom Verfahren her sauerstofffrei.

Bevorzugt wird in der Gasphasenelektrolysestufe und/oder in der Flüssigphasenelektrolysestufe neben Chlor entweder Wasserstoff oder Wasser als Produkt erhalten.

Der in der ersten Stufe nicht umgesetzte HCl-Anteil wird in der nachgeschalteten Salzsäureelektrolyse ebenfalls zu hochreinem Chlor (der Chloranteil beträgt mindestens 99,9 %) umgesetzt, das zusammen mit dem Chlor-Hauptstrom aus der ersten Stufe in einer nachgeschalteten Trocknung von störenden Wasserdampfanteilen befreit werden kann.

In einem bevorzugten Verfahren wird die Flüssigphasenelektrolysestufe und/oder die Gasphasenelektrolysestufe mit einer Sauerstoffverzehrkathode betrieben.

Insbesondere wird das bei der kathodischen Reaktion in der Flüssigphasenelektrolysestufe gegebenenfalls gebildete Wasser in den Salzsäurekreislauf der Absorptionsstufe zurückgeführt.

In einer Variante des erfindungsgemäßen Verfahrens werden die Elektrolysebedingungen in der Gasphasenelektrolysestufe so eingestellt, daß der HCl-Umsatz von 40 % bis 90 % beträgt.

Ein weiteres bevorzugtes Verfahren ist dadurch gekennzeichnet, daß die Elektrolysebedingungen in der Flüssigphasenelektrolysestufe so eingestellt werden, daß die Konzentration der abgereicherten Salzsäure von 5 bis 19 %, insbesondere von 12 % bis 14 % und die Konzentration der angereicherten Salzsäure von 6 bis 20 %, insbesondere von 13 % bis 15 % beträgt, was dem Optimum der erzielbaren Leitfähigkeit entspricht.

Die Menge des in der ersten Stufe erzeugten Wasserstoffs kann durch mehr oder weniger hohe HCl-Überspeisung der Gasphasenelektrolyse eingestellt werden, wobei sich mit zunehmender Überspeisung zunehmend günstigere Elektrolysebedingungen einstellen, der Energiebedarf für den gegebenenfalls als Nebenprodukt anfallenden Wasserstoff also sinkt. Die Menge des erzeugten Wasserstoffs ist damit regelbar, wenn in der zweiten Stufe mit der energiesparenden Sauerstoffverzehrkathode gearbeitet wird.

In der zweiten Elektrolysestufe entsteht insbesondere als Nebenprodukt aus der Reaktion des kathodisch reduzierten Sauerstoffs mit den durch die Membran wandernden Protonen Wasser, das als schwache Salzsäure (<1%) anfällt. Dieses kann als Ausgleich der über Chlor und die Membran ausgetragenen Wasseranteile teilweise wieder in den Salzsäurekreislauf zurückgeführt werden. Chlor-/HCl-Bilanzverluste bleiben dadurch gering. Darüber hinaus können damit auch Verluste aus dem Katholytkreislauf der Gasphasenelektrolyse ausgeglichen werden, die mit der Ausschleusung des Wasserstoffs verbunden sind.

Die Chlor-Trocknung ist beispielsweise zweistufig ausgeführt. Die Vortrocknung kann in einer Kolonne mit verdünnter Schwefelsäure durchgerührt werden, während die Nachtrocknung in einem als Flüssigkeitsringpumpe ausgeführten Gebläse erfolgen kann, das zu diesem Zweck mit konzentrierter Schwefelsäure bespeist wird. Die hier ausgeschleuste Schwefelsäure bespeist dann die o.g. Kolonne. Natürlich kann die konzentrierte Schwefelsäure entsprechend dem aus dem Stand der Technik bekannten Verfahren auch in eine Nachtrocknungskolonne eingespeist werden.

Das Gebläse hat in dieser Variante lediglich die Aufgabe, die Druckverluste zur im Kreislaufverbund vorgeschalteten Chemieanlage zu überwinden. Die sonst üblichen Chlor-Verdichtungen und -Verflüssigungen können angesichts der exzellenten Chlorqualität, die mit dem erfindungsgemäßen Verfahren erhalten wird, entfallen.

Anfahrpuffer für die Chlorversorgung der Hauptanlage ist bevorzugt das Inventar des Salzsäurekreislaufes der zweiten Stufe, der hierzu geeignet dimensioniert werden muß. Chlor aus der Salzsäureelektrolyse kann zunächst die Hauptanlage starten. Hier anfallendes HCl-Gas kann zunächst solange direkt in die Absorption der zweiten Stufe gespeist werden, bis aus der hochfahrenden Produktion genügend HCl-Gas anfällt, um die erste Stufe zu starten.

Kann an einem Standort der anfallend Wasserstoff chemisch nicht genutzt werden kann auch die erste Stufe mit Sauerstoffverzehrkathode gefahren werden, was eine weitere deutliche Energieersparnis bedeutet.

Weitere Vorteile des erfindungsgemäßen Verfahrens sind die folgenden:
Gegenüber herkömmlichen HCl-Recyclingverfahren hat das neue Verfahren einen niedrigeren Gesamt-Energiebedarf. Das Verfahren liefert eine exzellente Chlorqualität (wobei die Reinheit insbesondere größer oder gleich 99,9 % beträgt). Das Verfahren kommt ohne aufwendige Reinigungsverfahren aus. Der Wasserstoffanteil am Produkt ist in gewissen Grenzen steuerbar und ggf. verzichtbar. Durch den Bau einer sehr kompakten ersten Stufe (ca. 1/3 Elektroden- und Membranfläche im Vergleich zu herkömmlichen Elektrolysen), die nach bisherigen Versuchen drucklos bis 12 kA/m² betreibbar ist, und deutlich verkleinerter Absorption, können gegenüber der klassischen Elektrolyse ein weniger aufwendiger Aufbau und damit niedrigere Investitionskosten erreicht werden.

Das Verfahren weist sehr niedrige Chlor-Bilanzverluste auf. Es fällt wenig Abwasser aus Reaktionswasser und Transport durch die Membran als schwache (<1 %) Salzsäure an und der NaOH-Verbrauch zur Wasserstoffreinigung ist gering, da der Katholyt in der ersten Stufe lediglich als etwa 1-normale Salzsäure betrieben wird und der Katholytdruck höher als der anodenseitige HCl-Gasdruck ist, so daß Chlorverunreinigungen im Wasserstoff unwahrscheinlich sind.

Die Anlage zum Betrieb des erfindungsgemäßen Verfahrens kann vorteilhafterweise mit hoher Flexibilität als Nebenanlage zu einem beliebigen chlorverbrauchen chemischen Prozeß betrieben werden.

In einer bevorzugten Variante des Verfahrens wird das Verfahren mit der Flüssigphasenelektrolyse zur Bildung von Chlorgas für einen beliebigen chemischen Prozeß, in dem Chlorgas eingesetzt wird und HCl-Gas gebildet wird, gestartet. Das aus dem angeschlossenen chemischen Prozeß erhaltene HCl-Gas wird zunächst an der ersten Stufe, der Gasphasenelektrolyse, vorbeigeführt und direkt in die Absorptionsstufe geleitet. Es wird erst dann in die erste Stufe, die Gasphasenelektrolyse eingespeist, wenn die anfallende HCl-Gasmenge groß genug ist, um hier günstige Betriebsbedingungen zu erzielen.

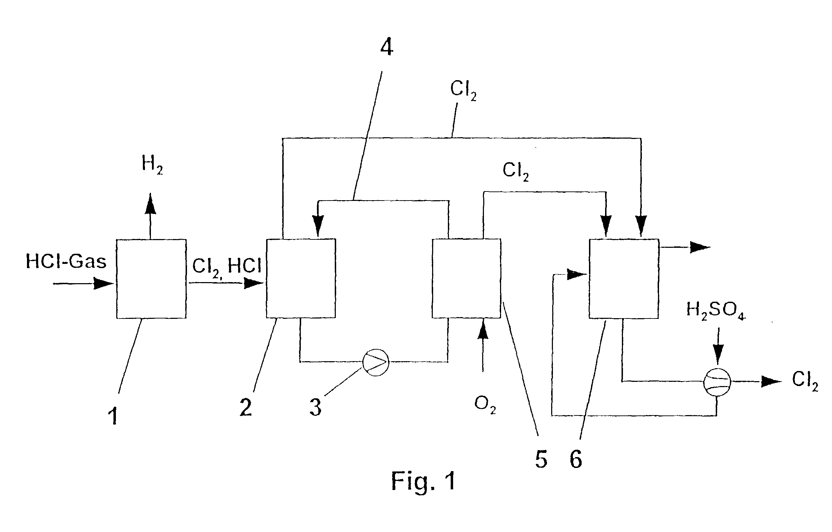

Die Erfindung wird nachstehend anhand von Fig. 1 beispielhaft näher erläutert.

### Beispiele

Eine drucklos betriebene Gasphasen-Elektrolysezelle 1 mit einer aktiven Fläche von 109 cm² ist über eine Vorlage 2 mit verdünnter Salzsäure zur Durchleitung des Produktgases und zur Adsorption des Rest-HCl-Gehaltes mit dem Anolytraum einer Laborzelle 5 verbunden, die mit einer Sauerstoffverzehrkathode von 30 cm² aktiver Fläche arbeitet.

Die Temperatur in der Gasphasen-Elektrolysezelle 1 wurde mit Hilfe der Katholytsäure (ca. 1-normale Salzsäure) in einem Umpumpkreislauf 3, 4 über einen Wärmetauscher auf 78°C konstant gehalten. Die Konzentration der Säure im Anolytkreislauf der Zelle 5 mit Sauerstoffverzehrkathode wurde dadurch im Bereich von 12 bis 14 % HCl gehalten, daß die Stromdichte in dieser Zelle jeweils so eingestellt wurde, daß die in der Vorlage absorbierte HCl-Menge in der Salzsäureelektrolyse mit Sauerstoffverzehrkathode umgesetzt wurde. Die Temperatur in diesem Kreislauf 3, 4 wurde über einen Wärmetauscher bei 57°C konstant gehalten.

Die Umsätze in der Gasphasenelektrolyse 1 wurden über Produktgasanalyse mittels Probenahme bestimmt; die Eingangs-HCl-Menge wurde mit einem Rotameter gemessen. Beide Chlorströme wurde im Trockner 6 vereinigt und die Ausgangschlorkonzentration bestimmt.

Die Nebenprodukte der Reaktion - Wasserstoff aus der Gasphasenelektrolyse und Reaktionswasser bzw. Kondensat aus der Zelle 5 mit Sauerstoffverzehrkathode wurden verworfen.

In drei Läufen konnten die in der Tabelle 1 wiedergegebenen Ergebnisse erzielt werden. Bei höheren Stromdichten konnte in der vorliegenden Anordnung nur noch ein Umsatz von 45 % in der Gasphasenelektrolyse erreicht werden, ohne daß die Spannung überproportional anstieg.

**Tabelle 1**

| | Stromdichte in Zelle 1 I (kA/m²) | Spannung Zelle 1 U (V) | HCI-Umsatz (%) | Stromdichte in Zelle 2 I (kA/m²) | Spannung Zelle 2 U (V) | Ausgangs-Chlorkonzentration (% gesamt) |
|---|---|---|---|---|---|---|
| Lauf 1 | 6 | 1,60 | 83 | 2,8 | 1,18 | 99,9 |
| Lauf 2 | 8 | 1,68 | 76,5 | 3,6 | 1,27 | 99,8 |
| Lauf 3 | 10 | 1,73 | 84 | 4,4 | 1,36 | >99,9 |

## Patentansprüche

1. Verfahren zur elektrochemischen Aufarbeitung von HCl-Gas zu hochreinem Chlor, **dadurch gekennzeichnet,**
**daß** das HCl-Gas in einer Gasphasenelektrolysestufe (1) zu einem HCl-Gas enthaltenden Chlorgas umgesetzt wird,
**daß** das HCl-haltige Chlorgas in einer Absorptionsstufe (2) mit abgereicherter flüssiger Salzsäure als Absorbens unter Bildung von angereicherter Salzsäure ausgewaschen und dadurch das Chlorgas vom HCl-Gas befreit wird,
**daß** die angereicherte Salzsäure in einer Flüssigphasenelektrolysestufe (5) unter Bildung von abgereicherter Salzsäure in Chlorgas umgesetzt wird,
**daß** die abgereicherte Salzsäure in die Absorptionsstufe (2) zurückgeführt wird (3, 4)
und **daß** die in der Gasphasenelektrolysestufe (1) und der Flüssigphasenelektrolysestufe (5) erzeugten Chlorströme abgezogen und ggf. vereinigt und ggf. getrocknet werden.

2. Verfahren nach Anspruch 1, **dadurch gekennzeichnet, daß** neben Chlorgas in der Gasphasenelektrolysestufe (1) und/oder in der Flüssigphasenelektrolysestufe (5) Wasserstoff oder Wasser als Produkte gebildet werden.

3. Verfahren nach Anspruch 1, **dadurch gekennzeichnet, daß** die Flüssigphasenelektrolysestufe (5) mit einer Sauerstoffverzehrkathode betrieben wird.

4. Verfahren nach einem der Ansprüche 2 oder 3, **dadurch gekennzeichnet, daß** das bei der kathodischen Reaktion in der Flüssigphasenelektrolysestufe (5) anfallende HCl-haltige Wasser in den Salzsäurekreislauf der Absorptionsstufe (2) zurückgeführt wird.

5. Verfahren nach einem der Ansprüche 1 bis 4, **dadurch gekennzeichnet, daß** die Gasphasenelektrolyse (1) mit einer Sauerstoffverzehrkathode betrieben wird.

6. Verfahren nach einem der Ansprüche 1 bis 5, **dadurch gekennzeichnet, daß** der HCl-Umsatz in der Gasphasenelektrolysestufe (1) von 40 % bis 90 % beträgt.

7. Verfahren nach einem der Ansprüche 1 bis 6, **dadurch gekennzeichnet, daß** die Konzentration der abgereicherten Salzsäure aus der Flüssigphasenelektrolysestufe (5) von 5 % bis 19 %, insbesondere von 12 % bis 14 % und die Konzentration der angereicherten Salzsäure von 6 % bis 20 %, insbesondere von 13 % bis 15 % beträgt.

8. Verfahren nach einem der Ansprüche 1 bis 7, **dadurch gekennzeichnet, daß** das Verfahren mit der Flüssigphasenelektrolysestufe (5) zur Bildung von Chlorgas als Edukt für einen beliebigen chemischen Prozeß gestartet wird, in dem HCl-Gas gebildet wird und daß das aus dem angeschlossenen Prozeß erhaltene HCl-Gas in die Gasphasenelektrolysestufe (1) eingespeist wird.

## Claims

1. Method for the electrochemical processing of HCl gas to high-purity chlorine **characterized**
**in that** the HCl gas is reacted in a gas-phase electrolysis stage (1) to give a chlorine gas which comprises HCl gas,
**in that** the HCl-comprising chlorine gas is scrubbed extractively in an absorption stage (2) with depleted liquid hydrochloric acid as the absorbent, to form enriched hydrochloric acid, so freeing the chlorine gas from the HCl gas,
**in that** the enriched hydrochloric acid is converted in a liquid-phase electrolysis stage (5) into chlorine gas, with formation of depleted hydrochloride acid,
**in that** the depleted hydrochloric acid is passed back (3, 4) into the absorption stage (2)
and **in that** the chlorine streams generated in the gas-phase electrolysis stage (1) and in the liquid-phase electrolysis stage (5) are drawn off, combined if desired and dried if desired.

2. Method according to Claim 1, **characterized in that** products formed in addition to chlorine gas in the gas-phase electrolysis stage (1) and/or in the liquid-phase electrolysis stage (5) are hydrogen or water.

3. Method according to Claim 1, **characterized in that** the liquid-phase electrolysis stage (5) is operated with a consumable oxygen cathode.

4. Method according to one of Claims 2 or 3, **characterized in that** HCl-containing water obtained in the cathodic reaction in the liquid-phase electrolysis stage (5) is passed back into the hydrochloric acid circuit of the absorption stage (2).

5. Method according to one of Claims 1 to 4, **characterized in that** the gas-phase electrolysis (1) is operated with a consumable oxygen cathode.

6. Method according to one of Claims 1 to 5, **characterized in that** the HCl conversion in the gas-phase electrolysis stage (1) is from 40% to 90%.

7. Method according to one of Claims 1 to 6, **characterized in that** the concentration of the depleted hydrochloric acid from the liquid-phase electrolysis stage (5) is from 5% to 19%, in particular from 12% to 14%, and the concentration of the enriched hydrochloric acid is from 6% to 20%, in particular from 13% to 15%.

8. Method according to one of Claims 1 to 7, **characterized in that** the method is started with the liquid-phase electrolysis stage (5) in order to form chlorine gas as a starting material for any desired chemical process in which HCl gas is formed and **in that** the HCl gas obtained from the attached process is fed into the gas-phase electrolysis stage (1).

## Revendications

1. Procédé de transformation électrochimique d'HCl gazeux en chlore de haute pureté, **caractérisé** :
en ce que dans un premier étage d'électrolyse en phase gazeuse (1), l'HCl gazeux est converti en chlore gazeux contenant de l'HCl gazeux,
en ce que dans un étage d'absorption (2), le chlore gazeux contenant du HCl est lavé par de l'acide chlorhydrique liquide appauvri qui sert d'absorbant, avec formation d'acide chlorhydrique enrichi, ce qui libère le chlore gazeux de l'HCl gazeux,
en ce que dans un étage d'électrolyse en phase liquide (5), l'acide chlorhydrique enrichi est converti en chlore gazeux en formant de l'acide chlorhydrique appauvri,
en ce que l'acide chlorhydrique appauvri est renvoyé (3, 4) dans l'étage d'absorption (2),
et en ce que les écoulements de chlore créés dans l'étage d'électrolyse en phase gazeuse (1) et dans l'étage d'électrolyse en phase liquide (5) sont extraits et éventuellement réunis et éventuellement séchés.

2. Procédé selon la revendication 1, **caractérisé en ce qu'**en plus de chlore gazeux, on forme dans l'étage d'électrolyse en phase gazeuse (1) et/ou dans l'étage d'électrolyse en phase liquide (5) de l'hydrogène ou de l'eau comme produits.

3. Procédé selon la revendication 1, **caractérisé en ce que** la réaction dans l'étage d'électrolyse en phase liquide (5) est conduite avec une cathode à oxygène consommable.

4. Procédé selon l'une des revendications 2 ou 3, **caractérisé en ce que** l'eau contenant du HCl produite lors de la réaction cathodique dans l'étage d'électrolyse en phase liquide (5) est renvoyée dans le circuit d'acide chlorhydrique de l'étage d'absorption (2).

5. Procédé selon l'une des revendications 1 à 4, **caractérisé en ce que** l'électrolyse en phase gazeuse (1) est conduite avec une cathode à oxygène consommable.

6. Procédé selon l'une des revendications 1 à 5, **caractérisé en ce que** la conversion du HCl dans l'étage d'électrolyse en phase gazeuse (1) est de 40 % à 90 %.

7. Procédé selon l'une des revendications 1 à 6, **caractérisé en ce que** la concentration de l'acide chlorhydrique appauvri sortant de l'étage d'électrolyse en phase liquide (5) est de 5 % à 19 %, en particulier de 12 % à 14 %, et la concentration de l'acide chlorhydrique enrichi est de 6 % à 20 %, en particulier de 13 % à 15 %.

8. Procédé selon l'une des revendications 1 à 7, **caractérisé en ce que** le procédé est lancé avec l'étage d'électrolyse en phase liquide (5) en vue de la formation de chlore gazeux comme produit pour un procédé chimique quelconque, dans lequel du HCl gazeux est formé, et **en ce que** l'HCl gazeux obtenu dans le procédé raccordé alimente l'étage d'électrolyse en phase gazeuse (1).
